(19) Europäisches Patentamt
European Patent Office
Office européen des brevets

(11) Publication number: **0 004 481 B1**

# (12) EUROPEAN PATENT SPECIFICATION

(45) Date of publication of patent specification: **11.05.83**

(51) Int. Cl.³: **C 08 F 10/00,** C 08 F 4/60, C 08 F 4/02

(21) Application number: **79300513.3**

(22) Date of filing: **29.03.79**

(54) **Catalyst compositions containing a trialkyl aluminium co-catalyst and the use for the polymerization of olefins.**

(30) Priority: **29.03.78 US 891317**

(43) Date of publication of application:
**03.10.79 Bulletin 79/20**

(45) Publication of the grant of the patent:
**11.05.83 Bulletin 83/19**

(84) Designated Contracting States:
**BE DE FR GB IT NL**

(56) References cited:
**FR - A - 2 052 706**
**FR - A - 2 322 158**
**FR - A - 2 342 297**
**FR - A - 2 396 769**
**GB - A - 1 310 817**
**GB - A - 1 400 472**

(73) Proprietor: **Exxon Research and Engineering Company**
**P.O.Box 390 180 Park Avenue**
**Florham Park New Jersey 07932 (US)**

(72) Inventor: **Langer, Arthur Walter, Jr.**
**175 Oakwood Road**
**Watchung New Jersey (US)**

(74) Representative: **Field, Roger Norton et al,**
**ESSO Engineering (Europe) Ltd. Patents & Licences Apex Tower High Street**
**New Malden Surrey KT3 4DJ (GB)**

**EP 0 004 481 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Catalyst compositions containing a trialkyl aluminium co-catalyst and the use for the polymerization of olefins

It is well known in the art to use an alkyl metal compound of Groups I—III in combination with a transition metal compound of Groups IVA—VIII as a catalyst system for olefinic polymerization. Thus GB—A—1310.817 is concerned with the copolymerization of ethylene and isoprene using certain organoaluminium compounds and a titanium tetrahalide as catalyst and GB—A—1400472 is concerned with the polymerisation of an olefinic hydrocarbon using as catalyst certain solid oxide supported halides of Group IVB, VB or VIB metals, organo metallic compounds of Group IIA or IIIA metals and certain Lewis bases. Although nearly all of the alkyl metal compounds are effective for the polymerization of ethylene, only a few are effective for the preparation of isotactic polymers of propylene and higher alpha-olefins and only $Et_2AlCl$, $AlEt_3$ and $i\text{-}Bu_2AlH$ have any important commercial utility.

A major cost involved in the polymerization of the alpha-olefins is the cost of the catalyst components. Therefore, the cost of the manufacture of the polymer can be effectively reduced by the use of catalyst systems having a higher polymerization activity. A further concern is the ability to produce polymers having a minimum amount of catalyst residues thereby eliminating a costly deashing operation. A still further and more important concern is the ability to produce polymers having a high degree of isotactic stereoregularity thereby enabling the manufacturer to eliminate or reduce the costly operation involving the removal and separation of atactic polymer from the isotactic polymer. The improved catalyst system of the present invention provides a means for the manufacture of obtaining polymers having a high degree of isotactic stereoregularity.

The improved catalyst systems of the present invention which are employed in alpha-olefin polymerizations comprise a mixture of a Group IVA—VIII transition metal halide on a support, one or more Lewis bases and as a co-catalyst at least one alkyl metal compound having the formula

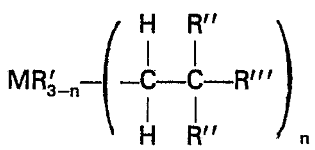

group wherein R′ is a $C_1$ to $C_{20}$ primary alkyl, alkenyl or aralkyl or hydrogen, R″ is a methyl or ethyl group, and R‴ is a $C_1$ to $C_{10}$ alkyl group, more preferably a $C_1$ to $C_6$ alkyl group and most preferably a $C_1$ to $C_3$ alkyl group. Such co-catalysts are not disclosed in GB 1310817 or GB 1400472.

The transition metal catalyst compound is preferably a Group IVA—VIII transition metal chloride or bromide and the transition metal halide may be in the form of solid crystalline compounds, solid solutions or compositions with other metal salts. It can be supported on the surface of a wide range of solid supports. For highest stereospecificity it is desirable to have the transition metal halide, or its support composition, in the layer lattice structure with very small crystallites, high surface are, or sufficient defects or foreign components to facilitate high dispersion during polymerization. The transition metal halide may also contain various additives such as Lewis bases, pi bases, polymers or organic or inorganic modifiers. Vanadium and titanium halides such as $VCl_3$, $VBr_3$, $TiCl_3$, $TiCl_4$, $TiBr_3$ or $TiBr_4$ are preferred, most preferably $TiCl_3$ or $TiCl_4$ and mixtures thereof. The most preferred $TiCl_3$ compounds are those which contain $TiCl_4$ edge sites on a layer lattice support such as alpha, delta, or gamma $TiCl_3$ or various structures and modifications of $TiCl_3$, $MgCl_2$ or other inorganic compounds having similar layer lattice structures. The most preferred $TiCl_4$ compounds are those supported on chloride layer lattice compounds such as $MgCl_2$. As an alternative to chloride other anionis may also be present, such as other halides, pseudo-halides, alkoxides, hydroxides, oxides or carboxylates, etc., providing that sufficient chloride is available for isospecific site formation. Mixed salts or double salts such as $K_2TiCl_6$ or $MgTiCl_6$ can be employed alone or in combination with electron donor compounds. Other supports besides $MgCl_2$ which are useful are hydroxychlorides, oxides or other inorganic or organic supports. The most preferred transition metal compound is $TiCl_4$ containing $MgCl_2$ especially in the presence of Lewis bases (electron donor compounds).

The Lewis bases are employed in combination with the trialkyl metal compound or with the Group IVA—VIII transition metal halide or with both components as long as they do not cause excessive cleavage of metal-carbon bonds or loss of active sites. A wide variety of Lewis bases may be used including such types as tertiary amines, esters, phosphines, phosphine oxides, phosphates (alkyl, aryl), phosphites, hexaalkyl phosphoric triamides, dimethyl sulfoxide, dimethyl formamide, secondary amines, ethers, epoxides, ketones, saturated and unsaturated heterocycles, or cyclic ethers and mixtures thereof. Typical but non-limiting examples are diethyl ether, dibutyl ether, tetrahydrofuran, ethyl acetate, methyl p-toluate, ethyl p-anisate, ethyl benzoate, phenyl acetate, amyl acetate, methyl octanoate, acetophenone, benzophenone, triethyl amine, tributylamine, dimethyl decylamine, pyridine, N-methylpiperidine, 2,2,6,6 tetramethylpiperidine and the like. The most preferred are esters of carboxylic acids such as ethylbenzoate.

The cocatalysts of the present inventtion preferably have the general formula $R_nMR'_{3-n}$ wherein M is aluminium, gallium or indium, R is a

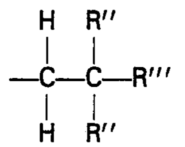

group, wherein R″ is a methyl or ethyl group and R‴ is a $C_1$ to $C_{10}$ alkyl group, more preferably a $C_1$ to $C_6$ alkyl group, and most preferably a $C_1$ to $C_3$ alkyl group, R′ is a $C_1$—$C_{20}$ primary alkyl, alkenyl or aralkyl group or is hydrogen; and n is 1 or 2 and preferably n=2. R is preferably a neopentyl group. Preferably, R′ is $C_2$—$C_{10}$ primary alkyl or aralkyl group or hydrogen; most preferably, R′ is $C_2$—$C_4$ primary alkyl or hydrogen with the restriction that not more than one hydrogen may be present. The R group is most preferably one which is not readily susceptible to elimination or displacement by monomer during polymerization.

Mixtures of the cocatalysts of this invention with conventional alkyl metal cocatalysts also yield improved results.

Suitable non-limiting examples include neopentyl$_2$AlEt, neopentyl $AlEt_2$, (2-methyl-2-ethyl-butyl)$_2$AlEt and (2,2-dimethylhexyl)$AlEt_2$.

Preferred compounds include those in the above list which have the formula $R_{1-2}AlR'_{2-1}$. The most preferred compounds in the above list have the formula $R_2AlR'$.

One method of preparing these secondary alkyl aluminum compounds is to react internal olefins with $AliBu_3$ or i-$Bu_2AlH$ to add Al-H across the double bond to form sec-strained ring compound, $AlR_3$ may be used to add Al-R across the double bond and obtain preferred compounds which are very resistant to displacement or elimination. Strained ring olefins include cyclopentene, norbornene, norbornadiene, ethylidene norbornene, dicyclopentadiene, and the like. This method is preferred because of raw material availability and simplicity of reaction, although this invention is not limited by the method of synthesis. Neopentyl aluminum compounds may be made by adding $AlMe_3$ to isobutylene.

Other methods include the direct synthesis from the reactive metals and the secondary or tertiary halides, the various organometallic syntheses involving ligand exchange between Al, Ga or In compounds and secondary or tertiary alkyl metal compounds of more electropositive metals such as Group IA and IIA, and the reaction of the metals with the alkyl mercury compounds. Particularly useful is the general reaction of secondary or tertiary alkyl lithium compounds or neopentyl lithium with $R'MX_2$ or $R'_2MX$ because it takes place readily in dilute hydrocarbon solution.

Although di-secondary alkyl aluminum compounds are preferred to mono-secondary alkyl compounds, the mono-alkyl types become more effective the greater the steric bulk of the group as long as it does not interfere with active site formation or lead to decomposition under reaction conditions.

For the alkyl metal cocatalysts of this invention, the most preferred transition metal compounds contain $TiCl_4$ supported on $MgCl_2$ and one or more Lewis bases. The concentration of the transition metal in the polymerization zone is 0.001 to 5 mM, preferably less than 0.1 mM.

The molar ratio of the alkyl metal compound to the transition metal compound is preferably 0.5:1 to 50:1, more preferably 1:1 to 20:1, most preferably 5:1. The molar ratio of Lewis base to organometal compound can vary widely but is preferably 0.1:1 1:1.

The catalyst system of the invention enables the process for making alpha olefin polymers having a high degree of isotactic stereoregularity to be carried out at a temperature of 25° to 150°C., more preferably 40° to 80°C., at pressures of 1 atm. to 50 atm. The reaction time for polymerization is 0.1 to 10 hours, more preferably 0.5 to 3 hours. Due to the high catalyst activity, shorter times and temperatures below 80°C. can be readily employed.

The reaction solvent for the system can be any inert paraffinic, naphthenic or aromatic hydrocarbon such as benzene, toluene, xylene, propane, butane, pentane, hexane, heptane, cyclohexane, and mixtures thereof. Preferably, excess liquid monomer is used as solvent. Gas phase polymerizations may also be carried out with or without minor amounts of solvent.

Typical, but non-limiting examples of $C_2$—$C_{20}$ alpha-olefinic monomers employed in the present invention for the manufacture of homo-, co- and terpolymers are ethylene, propylene, butene-1, pentene-1, hexene-1, octa-decene-1, 3-methylbutene-1, styrene, ethylidene norbornene, 1,5-hexadiene and the like and mixtures thereof. Isotactic polymerization of propylene and higher olefins is especially preferred, including block copolymerizations with ethylene.

The alkyl metal compound and the supported transition metal compound can be added separately to the reactor or premixed before addition to the reactor, but are preferably added separately. Replacing the secondary or tertiary alkyl groups by bulky or hindered alkoxy, phenoxy or dialkylamide groups does not provide the improved catalyst activity achieved by the cocatalyst in this invention.

An alternative embodiment of the present invention with respect to the cocatalysts ($R_nMR'_{3-n}$) is to use directly the reaction product of

$$R_2Mg+R'MX_2 \rightarrow R_2MR'+MgX_2$$

as exemplified in Belgian patent 863827; or

$$RMgX'+R'_2MX \rightarrow RMR'_2+MgXX'$$

as exemplified in Belgian patent 863823.

In the case of the formation of $R_2MR'$, the metal di- or trihalide compounds which are used are $R'MX_2$, $MX_3$ or a mixture thereof, wherein M is Al, Ga or In, R' is a $C_1$ to $C_{20}$ primary alkyl, alkenyl or aralkyl group or hydride; X is chloride, bromide or a monovalent anion which cannot initiate polymerization of mpefinic monomers, wherein the anion is olefinic monomers, wherein the anion is etc. or a mixture thereof. Typical but non-limiting examples are ethyl aluminium di-chloride, aluminum trichloride, ethyl aluminum dibromide, ethyl chloroaluminum bromide, octyl aluminum dichloride, ethyl indium dichloride, butyl aluminum dichloride, benzyl aluminum di-chloride, ethyl chloroaluminum butoxide, and mixtures thereof. Mixtures of metal halide compounds can be readily employed.

The $C_2$—$C_4$ alkyl aluminum dihalides are most preferred for high stereospecificity and the monoalkylaluminum dichlorides are most preferred.

The diorganomagnesium compound has the general formula $R_2Mg$ wherein R can be the same or different and is a

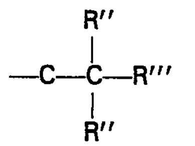

group, wherein R'' is an ethyl or methyl group and R''' is a $C_1$ to $C_{10}$ alkyl group. Mixtures of diorganomagnesium compounds can be readily employed providing at least one

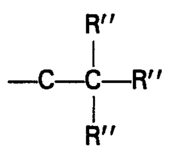

group is present.

The molar ratio of the alkyl metal halide compound ($R'MX_2$) to the diorganomagnesium compound is critical and is 0.5:1 to 2:1, more preferably 0.7:1, and most preferably 1:1. For the $MX_3$ compound the ratio is 1:1 to 1:3, most preferably 2:3. The number of moles of Lewis base can vary widely but is preferably equal to or less than the sum of the moles of the metal halide compound and the diorganomagnesium compound. The molar ratio of the metal halide compound or the diorganomagnesium compound to the transition metal compound is less than 50:1 and more preferably less than 20:1.

The metal halide compound and diorganomagnesium compound can be added separately to the reactor containing the transition metal compound but are preferably premixed before addition to the reactor. Employing either the metal halide compound or the diorganomagnesium compound alone with the transition metal compound does not provide the improved catalyst efficiency and stereospecificity as envisioned in this application. In order to attain this, it is necessary to employ both the metal halide compound and diorganomagnesium compound in combination with the transition metal compound in the critical proportions as previously defined. The concentration of the transition metal based on moles of metal chloride or bromide and diorganic magnesium compound in the polymerisation zone is 0.001 to 5 mM, preferably less than 0.1 mM.

In the case of the formation of $RMR'_2$, the metal alkyl compounds which are used may be $R'_2MX$, $R'_3M$ or a mixture thereof, wherein M is Al, Ga or In, R' is $C_1$ to $C_{20}$ primary alkyl, alkenyl, aralkyl or hydride groups; X is a monovalent anion which cannot initiate polymerization of olefins, such as F, Cl, Br, OR'', SR'', and OOCR'', wherein R'' is a $C_1$ to $C_{20}$ alkyl, branched alkyl, cycloalkyl, aryl, naphthenic, aralkyl or alkenyl group, X is more preferably Cl or Br and most preferably Cl. Typical but non-limiting examples are diethyl aluminum chloride, aluminum triethyl, diethyl-aluminum bromide, diethyl-aluminum iodide, diethylaluminum benzoate, diisobutylaluminum hydride, dioctylaluminum chloride, diethyl gallium butoxide, diethyl-indium neodecanoate, triethylindium, dibenzyl-aluminum chloride and mixtures thereof. Mixtures of metal alkyl compounds can be readily employed. The $C_2$—$C_4$ alkyl aluminum compounds are preferred for high stereospecificity, and the dialkyl aluminum chlorides are most preferred.

The mono-organomagnesium compound has the general formula RMgX' wherein R is

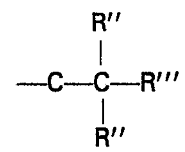

group, wherein R'' is a methyl or ethyl group and R''' is a $C_1$ to $C_{10}$ alkyl group. X' is an anion which cannot initiate polymerization of olefins, such as Cl, Br, OR'', SR'' and OOCR'', wherein R'' is a $C_1$ to $C_{20}$ alkyl, branched alkyl, cycloalkyl, naphthenic, aryl, aralkyl, allyl or alkenyl group. Mixtures of organomagnesium compounds can be readily employed. The most preferred $X^1$ groups are OR'' and OOCR''.

The molar ratio of the organomagnesium RMgX' compound to the metal alkyl compound ($R'_2MX$ or $R'_3M$) is 2:1 to 1:2, most preferably 1:1. The number of moles of Lewis base can vary widely but is preferably equal to or less than the sum of the moles of the metal alkyl compound and the organomagnesium compound. The molar ratio of the metal alkyl compound or the organomagnesium compound to the transition metal compound is less than 20:1 and more preferably less than 10:1.

The metal alkyl compound ($R_2'MX$ or $R_3'M$) and organomagnesium compound RMgX' can be added separately to the reactor containing the transition metal compound but are preferably premixed before addition to the reactor. Employing either the metal alkyl compound or the organo-magnesium compound alone with the transition metal compound does not provide the improved catalyst efficiency and stereospecificity as envisaged in this application. In order to attain this, it is necessary to employ both the metal alkyl compound and organomagnesium compound in combination with the transition metal compound in the proportions previously defined. The concentration of the transition metal based on rules of metal alkyl compound and organomagnesium compound in the polymerization zone is 0.001 to about 5 mM, preferably less than 0.1 mM.

The advantages of the unique and novel catalyst system and the novel process for the alpha-olefin polymerizations of the present invention can be more readily appreciated by reference to the following Example and Table.

Example

Neopentyl aluminum compounds containing various amounts of methyl groups were made by reacting $AlMe_3$ with excess isobutylene at 190°—200°C. for 42 hours and fractionating the crude product (W. Pfohl, Annalen, *629,* 207 (1960). Reaction with $AlEt_3$ gave various methyl ethyl neopentyl compositions. NMR analysis of $Neopentyl_3Al$:$\delta C—CH_3$=1.14 ppm, $\delta Al—CH_2$=0.59 ppm; $Neopentyl_{2.4}AlMe_{0.6}$:$\delta Al—CH_3$=0.15 ppm (based on benzene internal standard in deuterobenzene solvent). Propylene was polymerised in 500 ml n-heptane at 65°C for 1 hour at 765—770 mm using 0.2 g of the supported catalyst preparation which contained 3.44% Ti and 1 mmole of the aluminium compound:

TABLE

| Run | Al Cpd | Rate | %HI |
|---|---|---|---|
| A | Neopentyl $AlET_2$ | 227 | 92.9 |
| B | $(Neopentyl)_2AlEt$ | 182 | 93.1 |
| C | $(Neopentyl)_3Al$ | 39 | 91.2 |
| D | Neopentyl $AlEt_{1.57}Me_{0.43}$ | 196 | 89.8 |
| E | $(Neopentyl)_2AlEt_{0.5}Me_{0.5}$ | 78 | 92.1 |
| F | $(Neopentyl)_{2.4}AlMe_{0.6}$ | 123 | 94.4 |
| Control | $AlEt_3$ | 241 | 82.3 |

Comparison with a control run, * shows that all of the mixed neopentyl compounds gave much higher heptane insolubles (HI) i.e. stereospecificities, with some loss of activity. The activity of tri-neopentyl aluminum (Run C) was too low to be of any interest. These results show clearly the unexpected superiority of having between one and about 2.5 hindered alkyl groups compared to the conventional trialkyl aluminum compounds having either none or three such groups.

## Claims

1. An improved catalyst composition adaptable for use in olefinic polymerization which comprises a mixture of:

(a) Group IVA to VIII transition metal halide on a support; and

(b) an alkyl metal compound having the formula:

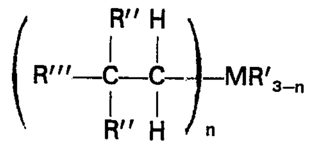

wherein R' is a $C_1$ to $C_{20}$ primary alkyl, alkenyl or aralkyl group or hydrogen; R'' is a methyl or ethyl group and R''' is a $C_1$ to $C_{10}$ alkyl group, M is aluminium, gallium or indium and n=1 or 2, and

(c) at least one Lewis base, with the proviso that said Lewis base does not cause excessive cleavage of metal-carbon bonds or loss of active sites.

2. A composition according to claim 1, wherein the halide group of said transition metal halide is chloride, bromide or a mixture thereof.

3. A composition according to either of claims 1 and 2 wherein the metal of said transition metal halide is trivalent titanium, trivalent vanadium or tetravalent titanium.

4. A composition according to claim 3 wherein said transition metal halide is $TiCl_3$ or $TiCl_4$ or a mixture thereof.

5. A composition according to any one of the preceding claims wherein said support contains $MgCl_2$.

6. A composition according to any one of the preceding claims wherein said Lewis base is an amine, ester, phosphine, phosphine oxide, phosphate, amide, ketone, sulphoxide, heterocyclic, epoxide or ether.

7. A composition according to claim 6 wherein said Lewis base is a carboxylic acid ester.

8. A composition according to any one of the preceding claims wherein the molar ratio of said alkyl metal compound to said transition metal halide is 0.5:1 to 50:1.

*In this control run a catalyst was used which had been made by ball milling 5 moles $MgCl_2$ with 1 mole ethylbenzoate for one day, adding 1 mole $TiCl_4$ and milling 3 days, then treating with neat $TiCl_4$ at 80°C, 2 hours, washing with heptane and vacuum dried. The catalyst contained 3.44% Ti.

9. A composition according to any one of the preceding claims wherein said alkyl metal compound is $RMR'_2$ where R is

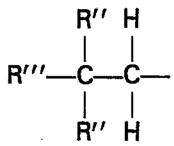

and which is formed from the reaction of $R'_2MX$ and RMgX', wherein X is chlorine, bromine or a monovalent anion which cannot initiate polymerization of olefinic monomers and X' is an anion which cannot initiate polymerization of olefinic monomers.

10. A composition according to any one of claims 1 to 8 wherein said alkyl metal compound is $R_2MR'$ where R is

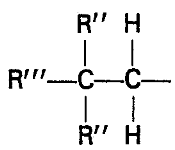

and which is formed from the reaction of $R_2Mg$ and $R'MX_2$ wherein X is chlorine, bromine or a monovalent anion which cannot initiate polymerization of olefinic monomers.

11. A composition according to either of claims 9 and 10 wherein said transition metal compound is $TiCl_4$ containing $MgCl_2$.

12. A composition according to any one of the preceding claims which includes a conventional alkyl metal cocatalyst mixed with the alkyl metal compound (b) wherein said conventional alkyl metal cocatalyst is a trialkyl metal or a dialkyl metal compound.

13. A process for the polymerization of a $C_2$ to $C_{20}$ alpha-olefinic monomer or a mixture thereof to a solid homo-, co- or terpolymer by contacting said monomer with a catalyst composition according to any one of the preceding claims.

14. A polymer when prepared by the process according to claim 13.

**Revendications**

1. Composition de catalyseur améliorée destinée à la polymérisation oléfinique comprenant un mélange:

a) d'un haligénure de métal de transition des groupes IVA à VIII sur un support.

b) d'un composé d'alcoylmétal répondant à la formule:

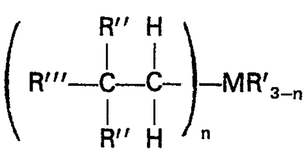

dans laquelle R' est un groupe alcoyle primaire en $C_1$ à $C_{20}$, alcényle ou aralcoyle ou de l'hydrogène; R'' est un groupe méthyle ou éthyle et R''' est un groupe alcoyle en $C_1$ à $C_{10}$, M est de l'aluminium, du gallium ou de l'indium et n=1 ou 2, et

c) d'au moins une base de Lewis, à condition que ladite base de Lewis ne provoque pas de scission excessive des liaisons métal-carbone ou de perte de sites actifs.

2. Composition selon la revendication 1, caractérisée en ce que le groupe halogénure dudit halogénure de métal de transition est le chlorure, le bromure ou leur mélange.

3. Composition selon l'une des revendications 1 ou 2, caractérisée en ce que le métal dudit halogénure de métal de transition est du titane trivalent, du vanadium trivalent ou du titane tétravalent.

4. Composition selon la revendication 3, caractérisée en ce que ledit halogénure de métal de transition est $TiCl_3$ ou $TiCl_4$ ou un mélange de ceux-ci.

5. Composition selon l'une quelconque des revendications 1 à 4 caractérisée en ce que ledit support contient du $MgCl_2$.

6. Composition selon l'une quelconque des revendications 1 à 5 caractérisée en ce que ladite base de Lewis est une amine, un ester, une phosphine, un oxyde de phosphine, un phosphate, un amide, un cétone, un sulfoxyde, un hétérocycle, un époxyde ou un éther.

7. Composition selon la revendication 6, caractérisée en ce que ladite base de Lewis est un ester d'acide carboxylique.

8. Composition selon l'une quelconque des revendications 1 à 7 caractérisée en ce que le rapport molaire dudit composé d'alcoylmétal audit halogénure de métal de transition est de 0,5:1 à 50:1.

9. Composition selon l'une quelconque des revendications 1 à 8 caractérisée en ce que ledit composé d'alcoylmétal est $RMR'_2$ où R est

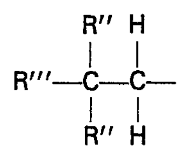

et qui est formé à partir de la réaction de $R'_2MX$ et de RMgX' où X est du chlore, du brome ou un anion monovalent qui ne peut pas amorcer la polymérisation des monomères oléfiniques et X' est un anion qui ne peut pas amorcer la polymérisation des monomères oléfiniques.

10. Composition selon l'une quelconque des revendications 1 à 8, caractérisée en ce que ledit composé d'alcoylmétal est $R_2MR'$ où R est

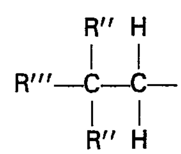

et qui est formé à partir de la réaction de $R_2Mg$

et de $R'MX_2$ où X est du chlore, du brome ou un anion monovalent qui ne peut pas amorcer la polymérisation des monomères oléfiniques.

11. Composition selon l'une des revendications 9 ou 10, caractérisée en ce que ledit composé de métal de transition est du $TiCl_4$ contenant $MgCl_2$.

12. Composition selon l'une quelconque des revendications 1 à 11 comprenant un cocatalyseur classique à base d'alcoylmétal mélangé avec le composé d'alcoylmétal (b), caractérisée en ce que ledit cocatalyseur classique à base d'alcoylmétal est un composé de trialcoylmétal ou de dialcoylmétal.

13. Procédé pour la polymérisation d'un monomère alpha-oléfinique en $C_2$ à $C_{20}$ ou d'un mélange en un homo-, co- ou terpolymere solide par mise en contact dudit monomère avec une composition de catalyseur selon l'une quelconque des revendications 1 à 12.

14. Polymère obtenu par le procédé selon la revendication 13.

## Patentansprüche

1. Verbesserte Katalysatorzusammensetzung, die zur Verwendung bei der olefinischen Polymerisation geeignet ist, gekennzeichnet durch eine Mischung von:

a) Gruppe VIA bis VIII-Übergangsmetallhalogenid auf einem Träger und

b) einer Alkylmetallverbindung mit der Formel

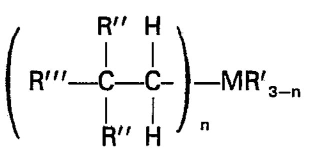

in der R' eine $C_1$—$C_{20}$ primäre Alkyl-, Alkenyl- oder Aralkylgruppe oder Wasserstoff ist, R'' eine Methyl- oder Ethylgruppe ist und R''' eine $C_1$—$C_{10}$ Alkylgruppe ist, M Aluminium, Gallium oder Indium ist und n=1 oder 2 ist, und

c) mindestens einer Lewis-Base, die keine übermäßige Spaltung von Metall/Kohlenstoff-Bindungen oder Verlust an aktiven Stellen bewirkt.

2. Zusammensetzung nach Anspruch 1, dadurch gekennzeichnet, daß die Halogenidgruppe des Übergangsmetallhalogenids Chlorid, Bromid oder eine Mischung derselben ist.

3. Zusammensetzung nach Anspruch 1 oder 2, dadurch gekennzeichnet, daß das Metall des Übergangsmetallhalogenids trivalentes Titan, trivalentes Vanadin oder tetravalentes Titan ist.

4. Zusammensetzung nach Anspruch 3, dadurch gekennzeichnet, daß das Übergangsmetallhalogenid $TiCl_3$ oder $TiCl_4$ oder eine Mischung derselben ist.

5. Zusammensetzung nach jedem der vorangegangenen Ansprüche, dadurch gekennzeichnet, daß der Träger $MgCl_2$ enthält.

6. Zusammensetzung nach jedem der vorangegangenen Ansprüche, dadurch gekennzeichnet, daß die Lewis-Base ein Amin, Ester, Phosphin, Phosphinoxid, Phosphat, Amid, Keton, Sulfoxid, Heterozyklus, Epoxid oder Ether ist.

7. Zusammensetzung nach Anspruch 6, dadurch gekennzeichnet, daß die Lewis-Base ein Carbonsäureester ist.

8. Zusammensetzung nach jedem der vorangegangenen Ansprüche, dadurch gekennzeichnet, daß das molare Verhältnis der Alkylmetallverbindung zum Übergangsmetallhalogenid 0,5:1 bis 50:1 beträgt.

9. Zusammensetzung nach jedem der vorangegangenen Ansprüche, dadurch gekennzeichnet, daß die Alkylmetallverbindung $RMR'_2$ ist, in der R

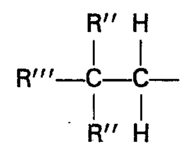

ist und die durch Umsetzung von $R'_2MX$ und $RMgX'$ gebildet ist, wobei X Chlor, Brom oder ein monovalentes Anion ist, das die Polymerisation von olefinischen Monomeren nicht initiieren kann, und X' ein Anion ist, das die Polymerisation von olefinischen Monomeren nicht initiieren kann.

10. Zusammensetzung nach jedem der Ansprüche 1 bis 8, dadurch gekennzeichnet, daß die Alkylmetallverbindung $R_2MR'$ ist, in der R

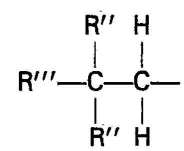

ist und die durch Umsetzung von $R_2Mg$ und $R'MX_2$ gebildet ist, wobei X Chlor, Brom oder ein monovalentes Anion ist, das die Polymerisation von olefinischen Monomeren nicht initiieren kann.

11. Zusammensetzung nach Anspruch 9 oder 10, dadurch gekennzeichnet, daß die Übergangsmetallverbindung $MgCl_2$ enthaltendes $TiCl_4$ ist.

12. Zusammensetzung nach jedem der vorangegangenen Ansprüche, dadurch gekennzeichnet, daß sie einen herkömmlichen Alkylmetall-Cokatalysator gemischt mit der Alkylmetallverbindung (b) enthält, wobei der herkömmliche Alkylmetall-Cokatalysator eine Trialkylmetall-oder eine Dialkylmetallverbindung ist.

13. Verfahren zur Polymerisation eines $C_2$—$C_{20}$ $\alpha$-olefinischen Monomer oder einer Mischung davon zu einem festen Homo-, Co- oder Terpolymer, in dem das Monomer mit einer Katalysatorzusammensetzung gemäß

irgendeinem der vorangehenden Ansprüche kontaktiert wird.

14. Nach dem Verfahren gemäß Anspruch 13 hergestelltes Polymer.